# EUROPÄISCHE PATENTANMELDUNG

(11) **EP 1 802 031 A1**
(43) Veröffentlichungstag der Anmeldung: **27.06.2007**
(21) Anmeldenummer: 05028098.1
(22) Anmeldetag: 21.12.2005
(51) Int. Cl.: H04L 12/24

(54) **Netzwerkmanagement mit redundanter Konfiguration**

(71) Anmelder: SIEMENS AKTIENGESELLSCHAFT, 80333 München (DE)
(72) Erfinder: Hirsch, Lucian, 81373 München (DE)

(57) **Zusammenfassung**

Die Erfindung betrifft ein Verfahren zum Betreiben eines Manager (NMC, OMC 1, OMC 2) und Agenten (MC 1, OMC 2, NE) umfassenden Netzwerkmanagementsystems, bei dem ein Manager (OMC 1) eine von einem Agenten (NE) versendete Nachricht (E-NE) von einer ersten Einrichtung (NE, OMC 2) empfängt. Der Manager (OMC 1) überprüft, ob er die von dem Agenten (NE) versendete Nachricht (E-NE) bereits zuvor von einer zweiten Einrichtung (NE, OMC 2) empfangen hat. In Abhängigkeit von dem Ergebnis der Überprüfung leitet der Manager (OMC 1) die Nachricht (E-NE) an einen ihm übergeordneten Manager (NMC) weiter. Weiterhin betrifft die Erfindung einen Manager (OMC 1), ein Netzwerkmanagementsystem und ein Computerprogrammprodukt zur Durchführung des Verfahrens.

## Beschreibung

Die Erfindung betrifft ein Verfahren zum Betreiben eines Manager und Agenten umfassenden Netzwerkmanagementsystems, bei dem ein Manager eine von einem Agenten versendete Nachricht empfängt.

Gemäß den Prinzipien eines Managementnetzes, auch als TMN-Prinzipien (TMN: Telecommunications Management Network) bezeichnet, existieren mehrere Managementschichten für das Management eines Kommunikationssystems - wie beispielsweise eines Mobilfunkkommunikationssystems -, wobei jede Schicht mit Ausnahme der obersten und untersten Schicht eine doppelte Funktion, nämlich eine Manager- und eine Agentenfunktion besitzt. Im managenden System ("managing system") übt jede Ebene außer der untersten eine Manager-Funktion für die darunterliegende Ebene aus. Im gemanagten System ("managed system") kommt jeder Ebene außer der obersten eine AgentenFunktion für die nächsthöhere Schicht zu.

Manager starten zur Netzüberwachung und -kontrolle Operationen, indem sie sogenannte "requests" versenden, die von Agenten ausgeführt werden, und erhalten entsprechende Rückmeldungen, sogenannte "responses", von den Agenten. Elemente des Telekommunikationsnetzes, auch als Ressourcen des Telekommunikationsnetzes bezeichnet, die in einer TMN-Hierarchie die Rolle eines Agenten ausüben, erkennen relevante Ereignisse, sogenannte "events", wie z.B. Alarme, generieren entsprechende Mitteilungen, sogenannte "notifications", und übertragen sie in Form von Ereignismeldungen, sogenannten "event reports", an Manager, um ein effizientes Netzmanagement zu ermöglichen.

Das Netzwerkmanagement kann unter anderem das Fehlermanagement (Fault-Management) und/oder das Konfigurationsmanagement (Configuration Management) und/oder das Sicherheitsmanagement (Security-Management) und/oder das des Abrechnungsmanagement (Accounting-Management) und/oder das Leistungsmanagement (Performance-Management) umfassen. Durch das Netzwerkmanagement sollen geeignete Mechanismen zur Informationsverteilung und -verwaltung bereitgestellt werden, so dass bei Bedarf ein umfassendes Bild über den Netzzustand zur Verfügung steht und die einzelnen Ressourcen des Telekommunikationsnetzes effizient überwacht und konfiguriert werden können.

Die Manager-Agent-Kommunikation erfolgt über sogenannte Management-Schnittstellen bzw. Manager-Agent-Schnittstellen, die in einer objekt-orientierten Umgebung durch ein Kommunikationsprotokoll, wie z.B. CMIP (Common Management Information Protocol) nach ITU-T X.711 oder CORBA (Common Object Request Broker Architecture), und durch ein Objektmodell gekennzeichnet sind. Objektmodelle dienen der Modellierung von Ressourcen des Telekommunikationsnetzes, wobei diese Ressourcen bei der Modellierung in Objektklassen eingeteilt werden.

Solche Schnittstellen gibt es beispielsweise zwischen einerseits der Netzwerkelementmanagement-Ebene (Network Element Management Level) und andererseits der Netzwerkelement-Ebene (Network Element Level). Ein Beispiel für Netzeinrichtungen dieser Manager-Agent-Schnittstelle stellen die Betriebs- und Wartungszentren (OMC: Operation and Maintenance Center) auf der Seite der Netzwerkelementmanagement-Ebene dar, sowie auf der Seite der Netzwerkelement-Ebene Einrichtungen wie z.B. Basisstationen des Basisstationssystems (BSS: Base Station System) eines GSM Mobilfunknetzes, oder Basisstationen anderer Kommunikationsnetze, beispielsweise NodeB's eines UMTS Mobilfunknetzes (UMTS: Universal Mobile Telecommunication System), oder Funkzugangspunkte eines WLAN-Systems (WLAN: Wireless Local Area Network) beispielsweise gemäß einem der IEEE 802.11-Standards.

Management-Schnittstellen bzw. Manager-Agent-Schnittstellen existieren auch zwischen einerseits der Netzwerkmanagement-Ebene (Network Management Level) und andererseits der Netzwerkelementmanagement-Ebene. Ein Beispiel für Netzeinrichtungen zu dieser Manager-Agent-Schnittstelle stellen die Netzwerkmanagementzentren (NMC: Network Management Center) auf der Seite der Netzwerkmanagement-Ebene und die Betriebs- und Wartungszentren (OMC: Operation and Maintenance Center) auf der Seite der Netzwerkelementmanagement-Ebene z.B. im genannten GSM oder einem anderen Mobilfunk- oder Telekommunikationsnetz dar.

Der Erfindung liegt die Aufgabe zugrunde, ein effizientes Verfahren zum Betreiben eines Netzwerkmanagementsystems, sowie einen Manager, ein Netzwerkmanagementsystem und ein Computerprogrammprodukt zur Durchführung des Verfahrens aufzuzeigen.

Diese Aufgabe wird durch ein Verfahren mit den Merkmalen des Anspruchs 1, sowie durch Vorrichtungen und ein Computerprogrammprodukt mit Merkmalen von nebengeordneten Ansprüchen gelöst. Vorteilhafte Ausgestaltungen und Weiterbildungen sind Gegenstand von Unteransprüchen.

Bei dem erfindungsgemäßen Verfahren zum Betreiben eines Netzwerkmanagementsystems empfängt ein Manager eine von einem Agenten versendete Nachricht von einer ersten Einrichtung und überprüft, ob er diese bereits zuvor von einer zweiten Einrichtung empfangen hat. In Abhängigkeit von dem Ergebnis der Überprüfung leitet der Manager die Nachricht an einen ihm übergeordneten Manager weiter.

Bei der von dem Agenten versendeten Nachricht handelt es sich vorzugsweise um eine Ereignismeldung, wie z.B. die Meldung eines Alarmes oder die Meldung einer den Agenten betreffenden Konfigurationsänderung. Die Erfindung kann auf alle oder lediglich bestimmte von dem Agenten versendete Nachrichten angewandt werden. Die Nachricht wird vorzugsweise von dem Agenten erzeugt, im Anschluss versendet, und kann über verschiedene Wege zum Manager gelangen: der Manager kann die Nachricht zumindest von der ersten oder der zweiten Einrichtung empfangen.

Nachdem der Manager die Nachricht empfangen hat, überprüft er, ob dies der erste Empfang der Nachricht ist, oder ob er diese zuvor auf anderem Wege bereits empfangen hat. Diese Überprüfung wird als Kriterium für die Entscheidung darüber verwendet, ob der Manager die Nachricht an den ihm übergeordneten Manager weiterleitet. Vorzugsweise wird die Nachricht nicht an den übergeordneten Manager weitergeleitet, wenn es sich nicht um den ersten Empfang der Nachricht bei dem Manager handelt, während sie im gegenteiligen Fall weitergeleitet wird. Auf diese Weise kann vermieden werden, dass die gleiche Nachricht mehrfach an den übergeordneten Manager weitergeleitet wird. Hierdurch kann die Schnittstelle zum übergeordneten Manager sowie der übergeordnete Manager entlastet werden.

In Weiterbildung der Erfindung handelt es sich bei der ersten oder der zweiten Einrichtung um den Agenten, und bei der jeweils anderen Einrichtung um einen weiteren Agenten. Dies bedeutet, dass der Manager die von dem Agenten versendete Nachricht entweder von dem Agenten oder von dem weiteren Agenten empfangen kann. In letzterem Fall leitet der weitere Agent die Nachricht von dem Agenten an den Manager weiter.

Einer Ausgestaltung der Erfindung gemäß handelt es sich bei der Nachricht um eine Nachricht, deren Weiterleitung an den übergeordneten Manager der übergeordnete Manager sowohl von dem Manager als auch von dem weiteren Agenten angefordert hat. Vorzugsweise bedeutet hierbei die Weiterleitung der Nachricht von dem weiteren Agenten an den übergeordneten Manager eine Weiterleitung direkt an den übergeordneten Manager, somit nicht über den Manager. Es handelt sich daher um eine Nachricht, in Bezug auf welche der übergeordnete Manager sowohl dem Manager als auch dem weiteren Agenten mitteilt, dass sie von Interesse für ihn ist und er daher eine Weiterleitung wünscht, falls der Manager bzw. der weitere Agent diese empfangen. Diese Anforderung des übergeordneten Managers kann gegebenenfalls zumindest in Bezug auf den weiteren Manager rückgängig gemacht werden, indem der übergeordnete Manager den weiteren Agent hierüber informiert.

Zusätzlich oder alternativ kann es sich bei der Nachricht um eine Nachricht handeln, deren Weiterleitung an den übergeordneten Manager der übergeordnete Manager zuvor von dem Manager angefordert hat, und deren Weiterleitung an den Manager der Manager zuvor von dem weiteren Agenten angefordert hat. In diesem Fall wird der Manager informiert, dass die Nachricht von Interesse für den übergeordneten Manager ist, so dass der Manager, falls er die Nachricht empfängt, diese an den übergeordneten Manager weiterzuleiten hat. Weiterhin wird der weitere Agent informiert, dass die Nachricht von Interesse für den Manager ist, so dass diese, falls der weitere Agent die Nachricht empfängt, von dem weiteren Agent an den Manager weiterzuleiten ist.

Einer Weiterbildung der Erfindung gemäß sendet der Manager in dem Fall, dass er die Nachricht lediglich einmal empfängt, eine Fehlermeldung an den übergeordneten Manager. Die Feststellung, dass die Nachricht lediglich einmal empfangen wurde, kann getroffen werden, indem ein zweiter Empfang zumindest innerhalb einer bestimmten Zeitspanne ausbleibt. Dass der Manager die Nachricht lediglich einmal empfängt bedeutet, dass er diese entweder von der ersten oder der zweiten Einrichtung, aber nicht von beiden Einrichtungen, empfängt. Die Feststellung, dass der Manager die Nachricht lediglich einmal empfangen hat, erfolgt vorzugsweise, indem der Manager von dem Agenten versendeten Nachrichten einen Parameter hinzufügt, und diesen Parameter bei dem zweiten Empfang einer Nachricht löscht. Besonders vorteilhaft ist es, wenn der Parameter angibt, von welcher Einrichtung der Manager die jeweilige von dem Agenten versendete Nachricht empfangen hat. Auf diese Weise können Rückschlüsse auf das ordnungsgemäße Funktionieren von Übertragungswegen der Nachricht gezogen werden.

In Ausgestaltung der Erfindung sendet der weitere Agent periodisch Überprüfungsnachrichten an den übergeordneten Manager zur Kontrolle des Funktionierens der Schnittstelle zwischen dem weiteren Agenten und dem übergeordneten Manager. Diese Überprüfungsnachrichten werden vorzugsweise direkt von dem weiteren Agenten an den übergeordneten Manager gesendet, nicht über den Manager. Zusätzlich oder alternativ kann der Manager periodisch Überprüfungsnachrichten an den übergeordneten Manager senden zur Kontrolle des Funktionierens der Schnittstelle zwischen dem Manager und dem übergeordneten Manager.

Vorteilhaft ist es, wenn der weitere Agent von dem Agenten versendete Nachrichten an den Manager weiterleitet zur Weiterleitung durch den Manager an den übergeordneten Manager in Abhängigkeit von der Überprüfung, und später von dem Agenten versendete Nachrichten ohne Weiterleitung an den Manager an den übergeordneten Manager weiterleitet. Es existieren somit zwei Arten der Weiterleitung von Nachrichten des Agenten durch den weiteren Agenten: zum einen an den Manager und zum anderen an den übergeordneten Manager. Vorzugsweise erfolgt ein Wechsel zwischen diesen Arten, wenn die Kommunikation zwischen dem Manager und dem übergeordneten Manager gestört und/oder der Manager ausgefallen ist. Der Wechsel kann auf Anweisung der übergeordneten Managers erfolgen.

Der erfindungsgemäße Manager für ein Netzwerkmanagementsystem weist Mittel auf zum Empfangen einer von einem Agenten versendeten Nachricht von einer ersten Einrichtung, Mittel zum Überprüfen, ob er diese bereits zuvor von einer zweiten Einrichtung empfangen hat, sowie Mittel zum Weiterleiten der Nachricht an einen ihm übergeordneten Manager in Abhängigkeit von dem Ergebnis der Überprüfung.

Das erfindungsgemäße Netzwerkmanagementsystem weist Mittel des Agenten auf zum Versenden von Nachrichten an den Manager und an den weiteren Agenten, Mittel des weiteren Agenten zum Weiterleiten von von dem Agenten empfangenen Nachrichten an den Manager, sowie Mittel des Managers zum Empfangen von von dem Agenten gesendeten Nachrichten von dem Agenten oder von dem weiteren Agenten, zum Überprüfen, ob er eine von dem Agenten versendete Nachricht bereits zuvor empfangen hat, und zum Weiterleiten der Nachricht an den ihm übergeordneten Manager in Abhängigkeit von dem Ergebnis der Überprüfung.

Der erfindungsgemäße Manager und das erfindungsgemäße Netzwerkmanagementsystem eignen sich insbesondere zur Durchführung des erfindungsgemäßen Verfahrens, wobei dies auch auf die Ausgestaltungen und Weiterbildungen zutreffen kann. Hierzu können sie weitere geeignete Mittel umfassen.

Das erfindungsgemäße Computerprogrammprodukt dient der Durchführung des erfindungsgemäßen Verfahrens, wobei dies auch auf die Ausgestaltungen und Weiterbildungen zutreffen kann. Unter einem Computerprogrammprodukt wird im Zusammenhang mit der vorliegenden Erfindung neben dem eigentlichen Computerprogramm (mit seinem über das normale physikalische Zusammenspiel zwischen Programm und Recheneinheit hinausgehenden technischen Effekt) insbesondere ein Aufzeichnungsträger für das Computerprogramm, eine Dateisammlung, eine konfigurierte Recheneinheit, aber auch beispielsweise eine Speichervorrichtung oder ein Server, auf der bzw. dem zum Computerprogramm gehörende Dateien gespeichert sind, verstanden.

Im folgenden wird die Erfindung anhand eines Ausführungsbeispiels näher erläutert. Dabei zeigt:

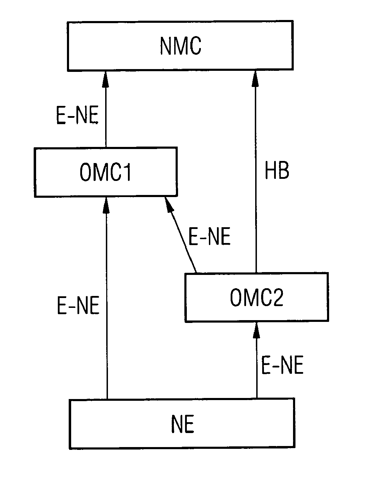

- Figur 1:: einen Ausschnitt aus einem Managementsystem.

Figur 1 zeigt einen Ausschnitt aus einem Managementsystem eines Mobilfunkkommunikationssystems nach dem Standard UMTS. Dieses umfasst drei Schichten: auf der untersten Schicht befindet sich das Netzelement NE, hierbei kann es sich z.B. um eine Einrichtung des Radionetzwerkes wie eine Basisstation handeln, oder auch um eine andere netzseitige Einrichtung. Die zweite Schicht umfasst die beiden Betriebs- und Wartungszentren OMC 1 und OMC 2, an welche das Netzelement NE angeschlossen ist und welche gegenüber dem Netzelement NE als Manager fungieren. Bestandteil der obersten Schicht ist das Netzwerkmanagementzentrum NMC, an welche die Betriebs- und Wartungszentren OMC 1 und OMC 2 angeschlossen sind und welches gegenüber den beiden Betriebs- und Wartungszentren OMC 1 und OMC 2 als Manager fungiert. Es können weitere nicht in Figur 1 dargestellte Bestandteile des Managementsystems vorhanden sein, welche für das Verständnis der Erfindung jedoch nicht relevant sind.

Gemäß seiner Funktion als gemanagte Einrichtung erzeugt das Netzelement NE Ereignismeldungen E-NE. Diese werden von dem Netzelement NE an die beiden Betriebs- und Wartungszentren OMC 1 und OMC 2 gesendet, durch die Pfeile von dem Netzelement NE zu den beiden Betriebs- und Wartungszentren OMC 1 und OMC 2 symbolisiert. Aufgabe der Betriebs- und Wartungszentren OMC 1 und OMC 2 ist es, die von dem Netzelement NE empfangenen Ereignismeldungen E-NE in das Objektmodell der für die Schnittstelle zum Netzwerkmanagementzentrum NMC verwendeten Objektmodell umzuwandeln und an das Netzwerkmanagementzentrum NMC weiterzuleiten. Es wird davon ausgegangen, dass für die Schnittstelle zwischen dem Betriebs- und Wartungszentrum OMC 1 und dem Netzelement NE das gleiche Objektmodell zum Einsatz kommt wie auch für die Schnittstelle zwischen dem Betriebs- und Wartungszentrum OMC 2 und dem Netzelement NE. Für die Kommunikation zwischen dem Netzwerkmanagementzentrum NMC und den Betriebs- und Wartungszentren OMC 1 und OMC 2 hingegen wird ein weniger komplexes Objektmodell verwendet, so dass vor der Weiterleitung von Ereignismeldungen E-NE eine Umwandlung hinsichtlich des Objektmodells erfolgen muss.

Die Ereignismeldungen E-NE des Netzelementes NE betreffen hoch-sensitive Daten, so dass das Netzelement NE aus Sicherheitsgründen nicht nur an ein Betriebs- und Wartungszentrum, sondern an die beiden Betriebs- und Wartungszentren OMC 1 und OMC 2 angeschlossen ist. Somit erhält jedes der beiden Betriebs- und Wartungszentren OMC 1 und OMC 2 von dem Netzelement NE die gleichen Ereignismeldungen E-NE. Das Netzwerkmanagementzentrum NMC abonniert bei den beiden Betriebs- und Wartungszentren OMC 1 und OMC 2 die für ihn relevanten Ereignismeldungen E-NE des Netzelementes NE. Vereinfachend wird davon ausgegangen, dass dieses Abonnieren in Bezug auf beide Betriebs- und Wartungszentren OMC 1 und OMC 2 gleich ist. Hierzu kann gemäß dem 3GPP Standard TS 32.302 ("Notification Integration Reference Point (IRP): Information Service", insbesondere Kapitel 6.3.1) der so genannte Subscribe-Mechanismus eingesetzt werden.

Das Netzwerkmanagementzentrum NMC sendet hierbei eine Subskriptions-Anforderung an die Agenten, d.h. an die beiden Betriebs- und Wartungszentren OMC 1 und OMC 2, wobei die Subskriptions-Anforderung Angaben über die Art und Parameterwerte der gewünschten bzw. für das Netzwerkmanagementzentrum NMC interessanten Ereignismeidungen angibt. Die Subskriptions-Anforderung hat die Erzeugung von geeigneten Filtern durch die Betriebs- und Wartungszentren OMC 1 und OMC 2 zur Folge. Aufgabe eines Filters ist es, durch entsprechende Tests nur diejenigen Ereignismeldungen zum anfordernden Manager weiterzuleiten, welche bestimmten Kriterien genügen, so dass ein Manager den Informationsfluss nach seinen individuellen Anforderungen steuern kann.

Die beschriebene redundante Konfiguration soll sicherstellen, dass ein Datenverlust weitgehend vermieden wird. Die Redundanz liegt aufgrund der Tatsache vor, dass das Netzelement NE seine Ereignismeldungen E-NE sowohl an das Betriebs- und Wartungszentrum OMC 1 als auch an das Betriebs- und Wartungszentrum OMC 2 sendet, und dass das Netzwerkmanagementzentrum NMC die Ereignismeldungen E-NE des Netzelementes NE sowohl bei dem Betriebs- und Wartungszentrum OMC 1 als auch bei dem Betriebs- und Wartungszentrum OMC 2 abonniert hat. Selbst im Falle des Ausfalls der Verbindung zwischen dem Netzelement NE und dem Betriebs- und Wartungszentrum OMC 1 oder OMC 2 oder des Ausfalls der Verbindung zwischen dem Netzwerkmanagementzentrum NMC und dem Betriebs- und Wartungszentrum OMC 1 oder OMC 2 kann das Netzwerkmanagementzentrum NMC von dem Netzelement NE versendete Ereignismeldungen E-NE empfangen.

Die beschriebene Sicherheit bringt jedoch den Nachteil mit sich, dass sowohl der Datenverkehr auf den Schnittstellen zum Netzwerkmanagementzentrum NMC als auch der Verarbeitungsaufwand betreffend vom Netzwerkmanagementzentrum NMC empfangene Ereignismeldungen gesteigert ist. Denn das Netzwerkmanagementzentrum NMC empfängt im Regelfall jede Ereignismeldung E-NE des Netzelementes NE zweifach, einmal von dem Betriebs- und Wartungszentrum OMC 1 und einmal von dem Betriebs- und Wartungszentrum OMC 2. Aufgrund der größeren Anzahl von empfangenen Ereignismeldungen ist es schwieriger für das Netzwerkmanagementzentrum NMC, auf wichtige Ereignisse schnell zu reagieren. Außerdem muss von dem Netzwerkmanagementzentrum NMC bzw. von dem das Netzwerkmanagementzentrum NMC steuernden Operator erkannt werden, dass eine Ereignismeldung doppelt empfangen wurde. Beispielsweise kann das Netzwerkmanagementzentrum NMC kurz nacheinander zwei Alarme empfangen, welche beide von dem Netzelement NE stammen, und welche leicht unterschiedliche von den Betriebs- und Wartungszentren OMC 1 und OMC 2 vergebene Werte für den Parameter "event time" aufweisen. Nun muss geklärt werden, ob es sich um den gleichen Ausfall handelt, wobei der Unterschied bezüglich des Parameters "event time" durch leicht verschiedene Zeiteinstellungen in den Betriebs- und Wartungszentren OMC 1 und OMC 2 verursacht wurde, oder ob tatsächlich zwei verschiedene Alarme vorliegen.

Um diese Schwierigkeiten zu umgehen, wird folgendermaßen vorgegangen: das Betriebs- und Wartungszentrum OMC 2 speichert die vom Netzelement NE empfangenen Ereignismeldungen E-NE und leitet diese unverändert an das Betriebs- und Wartungszentrum OMC 1 weiter. Eine Weiterleitung der vom Netzelement NE empfangenen Ereignismeldungen E-NE durch das Betriebs- und Wartungszentrum OMC 2 an das Netzwerkmanagementzentrum NMC erfolgt im Normalzustand nicht. Dies kann realisiert werden, indem das Netzwerkmanagementzentrum NMC an das Betriebs- und Wartungszentrum OMC 2 gemäß dem 3GPP Standard TS 32.302 ("Notification Integration Reference Point (IRP): Information Service", insbesondere Kapitel 6.7.1) seine Subskription aussetzt, indem eine "suspendSubscription"-Anforderung von dem Netzwerkmanagementzentrum NMC an das Betriebs- und Wartungszentrum OMC 2 gesendet wird.

Über die Schnittstelle zwischen dem Betriebs- und Wartungszentrum OMC 2 und dem Netzwerkmanagementzentrum NMC werden somit im Normalzustand, d.h. wenn die Schnittstelle zwischen dem Netzwerkmanagementzentrum NMC und dem Betriebs- und Wartungszentrum OMC 1 ordnungsgemäß funktioniert, nicht die Ereignismeldungen E-NE des Netzelementes NE übertragen, sondern lediglich andere Nachrichten HB. Bei diesen anderen Nachrichten HB handelt es sich vorzugsweise um Heartbeat-Notifikationen, welche das Betriebs- und Wartungszentrum OMC 2 gemäß dem 3GPP Standard TS 32.352 ("Communication Surveillance Integration Reference Point: Information Service", insbesondere Kapitel 5.3.1.1 und 6.5.1) periodisch im Rahmen eines Überwachungs-Mechanismus versendet. Der regelmäßige Empfang dieser Heartbeat-Notifikationen zeigt dem Netzwerkmanagementzentrum NMC an, dass sowohl der Agent, d.h. das Betriebs- und Wartungszentrum OMC 2, als auch die Schnittstelle zwischen Manager und Agent, d.h. die Schnittstelle Netzwerkmanagementzentrum NMC - Betriebs- und Wartungszentrum OMC 2, korrekt funktionieren.

Weiterhin können die anderen Nachrichten HB Ereignismeldungen eines anderen Netzelementes oder des Netzelementes NE umfassen, welche nicht zur Sicherheit sowohl an das Betriebs- und Wartungszentrum OMC 1 als auch an das Betriebs- und Wartungszentrum OMC 2 gesendet werden.

Wie bereits erläutert, leitet das Betriebs- und Wartungszentrum OMC 2 Ereignismeldungen E-NE des Netzelementes NE ohne vorhergehende Bearbeitung an das Betriebs- und Wartungszentrum OMC 1 weiter, d.h. sie werden durch das Betriebs- und Wartungszentrum OMC 2 lediglich durchgeroutet, da für die Schnittstelle zwischen dem Betriebs- und Wartungszentrum OMC 1 und dem Betriebs- und Wartungszentrum OMC 2 das gleiche Objektmodell verwendet wird wie für die beiden Schnittstellen Betriebs- und Wartungszentrum OMC 1 - Netzelement NE und Betriebs- und Wartungszentrum OMC 2 - Netzelement NE. Aus Sicht des Betriebs- und Wartungszentrums OMC 1 handelt es sich bei dem Betriebs- und Wartungszentrum OMC 2 um einen Agenten, von welchem das Betriebs- und Wartungszentrum OMC 1 Ereignismeldungen empfängt. Dementsprechend findet auch ein oben bereits erläutertes Subskriptions-Verfahren zwischen dem Betriebs- und Wartungszentrum OMC 1 als Manager und dem Betriebs- und Wartungszentrum OMC 2 als Agent in Bezug auf die Ereignismeldungen E-NE des Netzelementes NE statt.

Das Betriebs- und Wartungszentrum OMC 2 speichert vom Netzelement NE empfangene Ereignismeldungen E-NE. Diese werden gegebenenfalls weiterhin von dem Betriebs- und Wartungszentrum OMC 2 in das Objektmodell der Schnittstelle zum Netzwerkmanagementzentrum NMC umgewandelt und in dieser Form in eine Alarmliste eingetragen. Im folgenden wird beispielhaft angenommen, dass es sich bei den Ereignismeldungen E-NE um Alarme handelt; die Erfindung ist jedoch nicht auf diese Art von Ereignismeldungen beschränkt. Da die Subskription des Netzwerkmanagementzentrum NMC in Bezug auf die Ereignismeldungen E-NE des Netzelementes NE ausgesetzt ist, erfolgt keine Übertragung der Ereignismeldungen E-NE an das Netzwerkmanagementzentrum NMC. Aufgrund der Tatsache, dass das Betriebs- und Wartungszentrum OMC 2 die Ereignismeldungen E-NE des Netzelementes NE trotz der ausgesetzten Subskription speichert, sind die dem Betriebs- und Wartungszentrum OMC 2 vorliegenden Managementinformationen ständig aktuell, so dass eine Aktivierung der ausgesetzten Subskription des Netzwerkmanagementzentrums NMC jederzeit ohne Datenverlust erfolgen kann.

Üblicherweise, d.h. wenn jede der Schnittstellen Betriebs- und Wartungszentrum OMC 1 - Netzelement NE, Betriebs- und Wartungszentrum OMC 2 - Netzelement NE, sowie Betriebs- und Wartungszentrum OMC 1 - Betriebs- und Wartungszentrum OMC 2 ordnungsgemäß funktionieren, wird von dem Betriebs- und Wartungszentrum OMC 1 jeder von dem Netzelement NE generierte Alarm E-NE zwei mal empfangen: einmal direkt von dem Netzelement NE, und einmal von dem Betriebs- und Wartungszentrum OMC 2. Hierbei kann die zeitlich Reihenfolge des Empfangs von Alarm zu Alarm unterschiedlich sein, d.h. es ist nicht sicher, dass grundsätzlich jeder Alarm zunächst über die direkte Schnittstelle Betriebs- und Wartungszentrum OMC 1 - Netzelement, und später über die Schnittstelle Betriebs- und Wartungszentrum OMC 1 - Betriebs- und Wartungszentrum OMC 2 empfangen wird. Unabhängig vom Übertragungsweg haben die beiden Alarme jeweils die identischen Parameterwerte, darunter z.B. ein von dem Netzelement NE vergebener "notification identifier". Auf diese Weise ist das Betriebs- und Wartungszentrum OMC 1 in der Lage, Duplikate zu erkennen bzw. zu überprüfen, ob ein empfangener Alarm E-NE bereits zuvor empfangen wurde. Da bei ordnungsgemäßem Funktionieren aller betroffenen Schnittstellen jeder Alarm E-NE von dem Betriebs- und Wartungszentrum OMC 1 zweimal empfangen wird, jedoch nur einmal an das Netzwerkmanagementzentrum NMC weitergeleitet werden soll, wird folgendermaßen vorgegangen:

Nach dem Empfang eines von dem Netzelement NE stammenden Alarms E-NE prüft das Betriebs- und Wartungszentrum OMC 1 zuerst, ob dieser bereits zuvor schon einmal empfangen wurde. Ist die einen Alarm eindeutig kennzeichnende Parameterkombination noch nicht in der Liste der von dem Betriebs- und Wartungszentrum OMC 1 gespeicherten Alarme vorhanden, so handelt es sich um den erstmaligen Empfang dieses Alarms E-NE. Dieser erstmalig empfangene Alarm E-NE wird mit einer Wegekennung in die Alarmliste des Betriebs- und Wartungszentrums OMC 1 eingetragen. Die Wegekennung gibt hierbei an, ob der Alarm E-NE über die Schnittstelle Betriebs- und Wartungszentrum OMC 1 - Netzelement NE oder über die Schnittstelle Betriebs- und Wartungszentrum OMC 1 - Betriebs- und Wartungszentrum OMC 2 empfangen wurde. Weiterhin wird der erstmalig empfangene Alarm E-NE in das Objektmodell der Schnittstelle zum Netzwerkmanagementzentrum NMC umgewandelt, gegebenenfalls auch in dieser Form gespeichert, und an das Netzwerkmanagementzentrum NMC weitergeleitet.

Ist die einen Alarm eindeutig kennzeichnende Parameterkombination bereits in der Liste der von dem Betriebs- und Wartungszentrum OMC 1 gespeicherten Alarme vorhanden, handelt es sich um den zweiten Empfang dieses Alarms E-NE. Die Wegekennung dieses Alarms E-NE wird von dem Betriebs- und Wartungszentrum OMC 1 aus der Alarmliste entfernt. Ansonsten wird dieser Alarm E-NE von dem Betriebs- und Wartungszentrum OMC 1 ignoriert.

Im Normalbetrieb, d.h. wenn jeder Alarm E-NE des Netzelementes NE zweifach von dem Betriebs- und Wartungszentrum OMC 1 empfangen wird, sind die Wegekennungen aller Alarme E-NE des Netzelementes NE in der Alarmliste des Betriebs- und Wartungszentrums OMC 1 nach kurzer Zeit jeweils gelöscht. Bei einem Ausfall einer Schnittstelle Betriebs- und Wartungszentrum OMC 1 - Netzelement NE oder Betriebs- und Wartungszentrum OMC 2 - Netzelement NE oder Betriebs- und Wartungszentrum OMC 1 - Betriebs- und Wartungszentrum OMC 2 hingegen fehlt jeweils das Duplikat des Alarms E-NE, so dass die Wegekennung für diesen Alarm E-NE nicht gelöscht wird, sondern in der Alarmliste des Betriebs- und Wartungszentrum OMC 1 verbleibt.

Um Ausfälle der Schnittstellen Betriebs- und Wartungszentrum OMC 1 - Netzelement NE, Betriebs- und Wartungszentrum OMC 2 - Netzelement NE, sowie Betriebs- und Wartungszentrum OMC 1 - Betriebs- und Wartungszentrum OMC 2 zu erkennen, wird periodisch in der Alarmliste des Betriebs- und Wartungszentrums OMC 1 nach Wegekennungen gesucht. Wird eine Wegekennung gefunden und ist der Parameterwert "event time", welcher den Zeitpunkt des jeweiligen Alarms angibt, mindestens um eine konfigurierbare Zeitspanne älter als die aktuelle Zeit, so kann davon ausgegangen werden, dass das Duplikat zu diesem Alarm E-NE verloren gegangen ist bzw. das Betriebs- und Wartungszentrum OMC 1 nicht mehr erreichen wird.

Wird eine Wegekennung, welche den Empfang eines Alarms über die Schnittstelle Betriebs- und Wartungszentrum OMC 1 - Netzelement NE anzeigt, in Bezug auf einen "alten" Alarm E-NE aufgefunden, so kann daraus geschlossen werden, dass ein Fehler bei der Schnittstelle Betriebs- und Wartungszentrum OMC 1 - Betriebs- und Wartungszentrum OMC 2 und/oder bei der Schnittstelle Betriebs- und Wartungszentrum OMC 2 - Netzelement NE vorliegt. Das Betriebs- und Wartungszentrum OMC 1 sendet in diesem Fall eine Fehlermeldung an das Netzwerkmanagementzentrum NMC, welches die jeweilige Wegekennung oder eine entsprechende Größe angibt. Wird hingegen eine Wegekennung, welche den Empfang eines Alarms über die Schnittstelle Betriebs- und Wartungszentrum OMC 1 - Betriebs- und Wartungszentrum OMC 2 anzeigt, in Bezug auf einen "alten" Alarm E-NE aufgefunden, so kann daraus geschlossen werden, dass ein Fehler bei der Schnittstelle Betriebs- und Wartungszentrum OMC 1 - Netzelement NE vorliegt. Auch in diesem Fall sendet das Betriebs- und Wartungszentrum OMC 1 eine Fehlermeldung an das Netzwerkmanagementzentrum NMC, welches die jeweilige Wegekennung oder eine entsprechende Größe angibt.

Trotz der Tatsache, dass bei Ausfall einer Schnittstelle der einer Managementeinrichtung das Betriebs- und Wartungszentrum OMC 1 einen Alarm E-NE des Netzelementes NE lediglich einmal empfängt, wird die vollständige Managementinformation an das Netzwerkmanagementzentrum NMC weitergeleitet. Dies entspricht der Zielsetzung der für die hochsensitiven Daten des Netzelementes NE erwünschten Konfiguration. Jedoch soll durch die erläuterten Fehlermeldungen des Betriebs- und Wartungszentrum OMC 1 an das Netzwerkmanagementzentrum NMC sichergestellt werden, dass die redundante Konfiguration beibehalten bzw. wiederhergestellt werden kann.

Wie bereits erläutert ist es vorteilhaft, wenn von dem Betriebs- und Wartungszentrum OMC 2 an das Netzwerkmanagementzentrum NMC periodisch Heartbeat-Notifikationen gesendet werden. Derartige Notifikationen werden vorzugsweise auch von dem Betriebs- und Wartungszentrum OMC 1 an das Netzwerkmanagementzentrum NMC gesendet, wobei gegebenenfalls eine unterschiedliche Periodendauer gegenüber den Heartbeat-Notifikationen des Betriebs- und Wartungszentrum OMC 2 eingestellt werden kann. Das Netzwerkmanagementzentrum NMC erkennt den Ausfalls des in Bezug auf die Alarme E-NE des Netzelementes aktiven Agenten, d.h. des Betriebs- und Wartungszentrums OMC 1, oder den Ausfall der Schnittstelle Betriebs- und Wartungszentrum OMC 1 - Netzwerkmanagementzentrum NMC an dem Ausbleiben von Heartbeat-Notifikationen des Betriebs- und Wartungszentrums OMC 1. In diesem Fall fordert das Netzwerkmanagementzentrum NMC das Betriebs- und Wartungszentrum OMC 2 auf, von dem Netzelement NE empfangene Alarme E-NE fortan direkt an das Netzwerkmanagementzentrum NMC weiterzuleiten. Hierzu wird vorzugsweise eine in dem 3GPP Standard TS 32.302 ("Notification Integration Reference Point (IRP): Information Service", insbesondere Kapitel 6.7.2) beschriebene "resume-Subscription" -Anforderung von dem Netzwerkmanagementzentrum NMC an das Betriebs- und Wartungszentrum OMC 2 gesendet.

Hierdurch wird die ursprünglich von dem Netzwerkmanagementzentrum NMC bei dem Betriebs- und Wartungszentrum OMC 2 eingerichtete Subskription erneut aktiviert. Da wie bereits erläutert aufgrund der Speicherung der Alarme E-NE des Netzelementes NE in der Alarmliste des Betriebs- und Wartungszentrums OMC 2 die Information der Datenbank des Betriebs- und Wartungszentrums OMC 2 der tatsächlichen Netzsituation entspricht, entsteht durch dieses Umschalten des aktiven Agenten von dem Betriebs- und Wartungszentrum OMC 1 auf das Betriebs- und Wartungszentrum OMC 2 kein Datenverlust für den Netzwerkmanagementzentrum NMC. Zwischen dem Betriebs- und Wartungszentrum OMC 2 und dem Netzwerkmanagementzentrum NMC kann eine Synchronisation der Managementinformationen erfolgen, und neue Alarme E-NE des Netzelementes NE werden in Echtzeit von dem Betriebs- und Wartungszentrum OMC 2 an das Netzwerkmanagementzentrum NMC weitergeleitet. Nachdem der Fehler des Betriebs- und Wartungszentrums OMC 1 oder der Schnittstelle zwischen dem Betriebs- und Wartungszentrum OMC 1 und dem Netzwerkmanagementzentrum NMC behoben wurde, kann das in Bezug auf den Normalzustand beschriebene Verfahren fortgesetzt werden.

Während die Erfindung anhand eines Managementsystems zu einem UMTS-Mobilfunkkommunikationssystem erläutert wurde, kann sie auch auf andere Managementnetze angewandt werden. Die Erfindung eignet sich für verschiedene Arten von für das Netzwerkmanagement verwendeten Kommunikationsprotokollen, wie z.B. CORBA, CMIP, SNMP.

## Patentansprüche

1. Verfahren zum Betreiben eines Manager (NMC, OMC 1, OMC 2) und Agenten (OMC 1, OMC 2, NE) umfassenden Netzwerkmanagementsystems, bei dem ein Manager (OMC 1)
eine von einem Agenten (NE) versendete Nachricht (E-NE) von einer ersten Einrichtung (NE, OMC 2) empfängt, überprüft, ob er die von dem Agenten (NE) versendete Nachricht (E-NE) bereits zuvor von einer zweiten Einrichtung (NE, OMC 2) empfangen hat, und
in Abhängigkeit von dem Ergebnis der Überprüfung die Nachricht (E-NE) an einen ihm übergeordneten Manager (NMC) weiterleitet.

2. Verfahren nach Anspruch 1, bei dem
es sich bei der ersten oder der zweiten Einrichtung (NE, OMC 2) um den Agenten (NE), und bei der jeweils anderen Einrichtung um einen weiteren Agenten (OMC 2) handelt.

3. Verfahren nach Anspruch 2, bei dem
es sich bei der Nachricht (E-NE) um eine Nachricht (E-NE) handelt, deren Weiterleitung an den übergeordneten Manager (NMC) der übergeordnete Manager (NMC) sowohl von dem Manager (OMC 1) als auch von dem weiteren Agenten (OMC 2) angefordert hat.

4. Verfahren nach Anspruch 2 oder 3, bei dem
es sich bei der Nachricht (E-NE) um eine Nachricht (E-NE) handelt, deren Weiterleitung an den übergeordneten Manager (NMC) der übergeordnete Manager (NMC) zuvor von dem Manager (OMC 1) angefordert hat, und deren Weiterleitung an den Manager (OMC 1) der Manager (OMC 1) zuvor von dem weiteren Agenten (OMC 2) angefordert hat.

5. Verfahren nach einem der Ansprüche 1 bis 4, bei dem
der Manager (OMC 1) im Fall, dass er die Nachricht (E-NE) lediglich einmal empfängt, eine Fehlermeldung an den übergeordneten Manager (NMC) sendet.

6. Verfahren nach einem der Ansprüche 1 bis 5, bei dem
eine Feststellung, dass der Manager (OMC 1) die Nachricht (E-NE) lediglich einmal empfangen hat, erfolgt, indem der Manager (OMC 1) von dem Agenten (NE) versendeten und von dem Manager (OMC 1) erstmalig empfangenen und gespeicherten Nachrichten (E-NE) einen Parameter hinzufügt, und diesen Parameter bei dem zweiten Empfang einer Nachricht (E-NE) löscht.

7. Verfahren nach Anspruch 6, bei dem
der Parameter angibt, von welcher Einrichtung (NE, OMC 2) der Manager (OMC 1) die jeweilige von dem Agenten (NE) versendete Nachricht (E-NE) empfangen hat.

8. Verfahren nach einem der Ansprüche 2 bis 7, bei dem
der weitere Agent (OMC 2) periodisch Überprüfungsnachrichten an den übergeordneten Manager (NMC) sendet zur Kontrolle des Funktionierens der Schnittstelle zwischen dem weiteren Agenten (OMC 2) und dem übergeordneten Manager (NMC).

9. Verfahren nach einem der Ansprüche 1 bis 8, bei dem
der Manager (OMC 1) periodisch Überprüfungsnachrichten an den übergeordneten Manager (NMC) sendet zur Kontrolle des Funktionierens der Schnittstelle zwischen dem Manager (OMC 1) und dem übergeordneten Manager (NMC).

10. Verfahren nach einem der Ansprüche 2 bis 9, bei dem
der weitere Agent (OMC 2) von dem Agenten (NE) versendete Nachrichten an den Manager (OMC 1) weiterleitet zur Weiterleitung durch den Manager (OMC 1) an den übergeordneten Manager (NMC) in Abhängigkeit von der Überprüfung, und
später der weitere Agent (OMC 2) von dem Agenten (NE) versendete Nachrichten ohne Weiterleitung an den Manager (OMC 1) an den übergeordneten Manager (NMC) weiterleitet.

11. Verfahren nach Anspruch 10, bei dem
ein Wechsel zwischen der Art der Weiterleitung durch den weiteren Agenten (OMC 2) erfolgt, wenn die Kommunikation zwischen dem Manager (OMC 1) und dem übergeordneten Manager (NMC) gestört und/oder der Manager (OMC 1) ausgefallen ist.

12. Manager (OMC 1) für ein Netzwerkmanagementsystem, mit
Mitteln zum Empfangen einer von einem Agenten (NE) versendeten Nachricht (E-NE) von einer ersten Einrichtung (NE, OMC 2),
Mitteln zum Überprüfen, ob er die von dem Agenten (NE) versendete Nachricht (E-NE) bereits zuvor von einer zweiten Einrichtung (NE, OMC 2) empfangen hat, und
Mitteln zum Weiterleiten der Nachricht (E-NE) an einen ihm übergeordneten Manager (NMC) in Abhängigkeit von dem Ergebnis der Überprüfung.

13. Netzwerkmanagementsystem, umfassend einen Manager (OMC 1) und einen ihn übergeordneten Manager (NMC), sowie einen Agenten (NE) und einen weiteren Agenten (OMC 2), mit
Mitteln des Agenten (NE) zum Versenden von Nachrichten an den Manager (OMC 1) und an den weiteren Agenten (OMC 2), Mitteln des weiteren Agenten (OMC 2) zum Weiterleiten von von dem Agenten (NE) empfangenen Nachrichten an den Manager (OMC 1),
Mitteln des Managers (OMC 1) zum Empfangen von von dem Agenten (NE) gesendeten Nachrichten von dem Agenten (NE) oder von dem weiteren Agenten (OMC 2),
Mitteln des Managers (OMC 1) zum Überprüfen, ob er eine von dem Agenten (NE) versendete Nachricht (E-NE) bereits zuvor empfangen hat, und Mitteln des Managers (OMC 1) zum Weiterleiten der Nachricht (E-NE) an den ihm übergeordneten Manager (NMC) in Abhängigkeit von dem Ergebnis der Überprüfung.

14. Computerprogrammprodukt zur Durchführung eines Verfahrens nach einem der Ansprüche 1 bis 11.
